# FASCICULE DE BREVET EUROPEEN

(11) **EP 4 127 503 B1**
(45) Date de publication et mention de la délivrance du brevet: **14.08.2024**
(21) Numéro de dépôt: 21732366.6
(22) Date de dépôt: 24.03.2021
(51) Int. Cl.: F16D 55/40, B60T 1/06, B60T 13/22, F16D 59/02

(54) **MACHINE HYDRAULIQUE COMPRENANT UN EMPILEMENT DE DISQUES SOLLICITÉS PAR UN POUSSOIR**
HYDRAULISCHE MASCHINE MIT EINEM VON EINER SCHUBSTANGE BEAUFSCHLAGTEN SCHEIBENSTAPEL
HYDRAULIC MACHINE COMPRISING A STACK OF DISCS ACTED ON BY A PUSH ROD

(30) Priorité: 27.03.2020 FR 2003031
(43) Date de publication de la demande: 08.02.2023
(73) Titulaire: Poclain Hydraulics Industrie, 60410 Verberie (FR)
(72) Inventeur: GRILLON, Gilles, 60410 Verberie (FR); ENGRAND, Julien, 60410 Verberie (FR); RESPECTE, Jérémy Gérard, 60410 Verberie (FR); COSTAZ, Dominique, 60410 Verberie (FR); BONNARD, Loïc, 60410 Verberie (FR)
(74) Mandataire: Regimbeau
(86) Numéro de dépôt international: PCT/FR2021/050508
(87) Numéro de publication internationale: WO 2021/191562

(56) Documents cités:
- EP-A1- 1 072 814
- EP-A1- 1 154 170
- EP-A1- 3 269 994
- GB-A- 2 314 601

## Description

### DOMAINE DE L'INVENTION

L'invention concerne les machines hydrauliques, en particulier, mais non exclusivement, les machines hydrauliques à pistons radiaux.

### ETAT DE LA TECHNIQUE

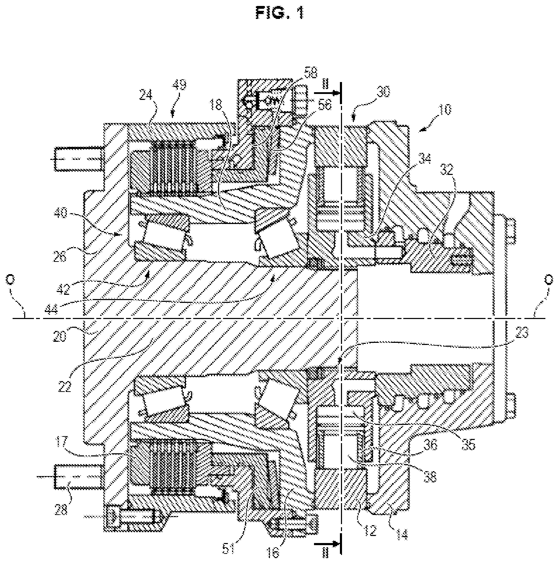

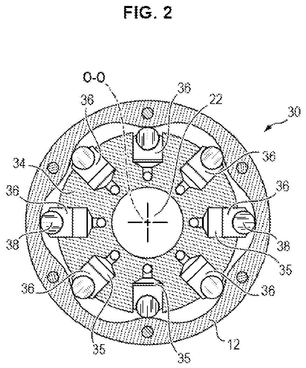

On a déjà proposé de nombreux types de machines hydrauliques. On trouvera un exemple de réalisation d'une telle machine reproduit aux figures 1 et 2. Elle comprend essentiellement cinq ensembles : un boîtier 10, un arbre 20, un ensemble 30 formant moteur ou pompe disposé entre le boîtier et l'arbre, des paliers ou roulements 42, 44 de guidage à rotation relative de l'arbre par rapport au boîtier et un frein 49.

Le boîtier 10 est destiné à être fixé au châssis d'une machine ou d'un véhicule. Il comprend une came 12 à lobes multiples prise en sandwich entre deux éléments latéraux du boîtier.

L'arbre 20 supporte une prise de force 28 adaptée pour porter un accessoire qui doit être entraîné à rotation, par exemple la jante d'une roue ou tout autre équipement, dans le cas où la machine constitue un moteur et délivre un couple d'entrainement sur l'accessoire. Dans le cas où elle constitue une pompe, la prise de force reçoit un couple mécanique moteur d'entrainement appliqué sur l'entrée de la machine.

L'ensemble 30 formant moteur ou pompe est à pistons radiaux. Il comprend un distributeur 32, un bloc cylindres 34 qui comporte une pluralité de cylindres radiaux 35 logeant chacun un piston 36 portant chacun un galet 38 en appui contre la came 12 solidaire du boîtier. Lorsque le distributeur 32 applique cycliquement un fluide sous pression à l'intérieur des cylindres 35, la sollicitation des pistons 36 et des galets 38 associés sur la came 12 entraîne le bloc cylindres 34 à rotation par rapport à la came et par conséquent par rapport au boîtier 10.

Le bloc cylindres 34 étant lié à rotation avec l'élément central 22 de l'arbre, dans ce cas l'arbre est entraîné à rotation par la pression du fluide appliquée par le distributeur. La machine hydraulique constitue alors un moteur.

Lorsque, au contraire, un effort mécanique est appliqué par la prise de force sur l'arbre 20 dans le sens d'un entraînement à rotation par rapport au boîtier 10, le déplacement des galets et des pistons par rapport aux lobes de la came induit une variation de volume des cylindres et par conséquent applique une pression de fluide sur le distributeur. La machine fonctionne alors en pompe.

Cette machine est réversible, et donc fonctionne indifféremment en tant que pompe ou moteur, et peut également tourner dans deux sens de rotation. Une telle machine hydraulique peut donc se retrouver dans quatre situations différentes, qui définissent les quatre quadrants de valeur de pression et de sens de débit : marche avant, en traction ou en retenue, et marche arrière, en traction ou en retenue.

Le frein 49 est formé d'un empilement de disques liés alternativement à rotation les uns à l'arbre et les autres au boîtier. Les disques sont sollicités en appui mutuel, donc en position de freinage, par un élément élastique 56 tel qu'une rondelle Belleville.

Cet organe 56 est disposé entre d'une part un élément du boîtier et d'autre part un piston longitudinal 51 qui prend appui sur l'empilement de disques. Un effort antagoniste à l'organe élastique peut être appliqué dans une chambre de commande 58, placée entre l'empilement de disques et le piston, afin de placer le frein en position de défreinage.

On considère ici pour les besoins des explications qui suivent la surface frottante, ou surface de friction, des disques. Il s'agit de la surface des disques par laquelle ils sont en contact mutuel et qui génère une friction produisant le freinage. Elle doit donc être distinguée de la surface des disques ne servant pas à cette friction. On considère aussi la surface de poussée qui est la surface du piston longitudinal 51 et du premier disque de l'empilement, par laquelle ces deux organes sont en contact mutuel pour la transmission de l'effort de poussée.

Dans beaucoup de machines, la surface de friction et la surface de poussée ne sont pas en coïncidence lorsqu'elles sont considérées dans leurs plans respectifs perpendiculaires à l'axe. Autrement dit, elles ne sont pas localement centrées l'une par rapport à l'autre (bien que le piston longitudinal et les disques soient coaxiaux). Il s'agit par exemple d'une situation dans laquelle la surface de friction est décalée en direction radiale opposée à l'axe par rapport à la surface de poussée. Dans certains cas, c'est le décalage contraire qui est observé. En d'autres termes, il s'agit d'une situation dans laquelle les positions radiales respectives de la surface de friction et la surface de poussée ne sont pas coïncidentes, la surface de friction pouvant être située radialement plus haute que la surface de poussée et inversement.

Dans les deux cas, cela signifie que la poussée du piston ne s'exerce pas dans l'alignement de la plus grande partie de la surface de friction ou bien n'est pas convenablement centrée par rapport à cette dernière localement. Il s'ensuit que la poussée n'est pas transmise de façon optimale aux disques, résultant en une pression de contact hétérogène dans les surfaces de friction. Il s'ensuit que la pression est mal répartie dans les disques, et notamment est trop importante à certains endroits. Il peut s'ensuivre une tendance à l'apparition d'un sur-couple ou d'un grippage. On définit le sur-couple comme la fourniture temporaire d'un supplément de couple dont on ne peut pas prévoir l'intensité. Des différences de couple importantes peuvent alors survenir sur deux freins montés sur un même essieu par exemple, résultant en une instabilité de la machine lors du freinage. On peut aussi voir apparaitre des vibrations. Pour y pallier, on serait amené à sur-dimensionner l'ensemble des composants par lesquels transite le couple du frein. Par exemple les disques formant le frein devraient être plus épais afin de permettre le passage de ce couple additionnel dans les liaisons cannelées de ces disques avec leurs pièces antagonistes respectives. Or ces deux situations sont à éviter. À titre d'exemple, les freins à disques nitrurés sont particulièrement sujets au sur-couple.

Le document EP-1 154 170 divulgue une machine hydraulique comprenant un empilement de disques et un poussoir apte à pousser les disques en appui les uns contre les autres dans une direction parallèle à l'axe, le poussoir présentant une encoche annulaire radiale entamant le poussoir à partir d'un côté du poussoir opposé à l'axe.

Un but de l'invention est d'éviter le surdimensionnement des composants de la chaîne de transmission du couple de frein (notamment d'éviter d'augmenter l'épaisseur des disques, leur diamètre et le nombre de leurs cannelures) et de réduire les risques de survenue d'un sur-couple ou d'un grippage de la machine.

### EXPOSE DE L'INVENTION

A cet effet, on prévoit une machine hydraulique selon la revendication 1.

En d'autres termes, l'encoche se trouve du côté de l'écart entre l'endroit où s'exerce la poussée et la ligne de rayon moyen des surfaces de friction des disques. Ainsi, en présence d'un décalage radial entre les surfaces de friction et la surface de poussée, l'encoche permet au poussoir de se fléchir afin de recentrer l'effort de poussée sur les surfaces de friction. Par conséquent, l'effort de poussée s'exerce davantage à l'aplomb des surfaces de friction. Par exemple, si la pression est trop forte du côté le plus proche de l'extérieur de la pile de disques, la présence de l'encoche permet de soulager cette partie. On répartit ainsi la pression de manière plus homogène. L'absence de forte pression de contact évite ainsi l'apparition d'un régime de lubrification dit « sec », régime dans lequel apparait le sur-couple. Le freinage est meilleur et plus régulier. De plus, il n'est plus nécessaire de sur-dimensionner les composants de transmission de la chaîne de couple de frein. En résumé, l'invention permet une meilleure diffusion de l'effort presseur sur la pile de disques afin d'éviter les phénomènes de grippage et de sur-couple. En outre, cette solution met en oeuvre une pièce unique, et non plusieurs pièces mobiles l'une par rapport à l'autre, pour simplifier le montage et la fabrication, en particulier pour réduire le risque d'oubli de pièce lors de l'assemblage de la machine. L'encoche va jusqu'à l'aplomb du rayon moyen des surfaces de friction.

On peut observer que l'encoche s'étend dans une partie du poussoir qui transmet une poussée sur les disques.

On peut prévoir que le fond de l'encoche s'étend au droit de la surface de poussée. En d'autres termes, un rayon de l'encoche au fond de l'encoche est compris entre un plus petit rayon de la surface de poussée et un plus grand rayon de la surface de poussée.

On peut prévoir que le fond de l'encoche s'étend au droit des surfaces de friction. En d'autres termes, un rayon de l'encoche au fond de l'encoche est compris entre un plus petit rayon des surfaces de friction et un plus grand rayon des surfaces de friction.

On peut prévoir que la machine est configurée pour qu'un organe exerce sur le poussoir un effort de freinage sur une zone de réception présentant un rayon moyen de réception mesuré à partir de l'axe et qui s'étend au-delà du rayon moyen de poussée lorsque le rayon moyen de poussée s'étend au-delà du rayon moyen de friction, et en deçà dans le cas contraire.

On peut prévoir que la zone de réception présente un plus petit rayon qui s'étend au-delà d'un plus grand rayon de la surface de poussée ou de la surface de friction lorsque le rayon moyen de poussée s'étend au-delà du rayon moyen de friction, et en deçà dans le cas contraire.

On peut prévoir que la zone de réception présente un plus petit rayon qui s'étend au-delà d'un plus petit rayon de l'encoche lorsque le rayon moyen de poussée s'étend au-delà du rayon moyen de friction, et en deçà dans le cas contraire.

On peut prévoir que le poussoir présente un rayon supérieur à un plus grand rayon des surfaces de friction.

Dans cette configuration, le poussoir a une dimension qui va en dehors des surfaces de friction de la pile de disques en vue axiale de la machine. Le poussoir présente un rayon situé à l'extérieur de la surface de friction.

On peut prévoir qu'un plus grand rayon des surfaces de friction est supérieur au plus petit rayon de l'encoche ou qu'un plus petit rayon des surfaces de friction est inférieur au plus grand rayon de l'encoche.

On peut prévoir que la machine est agencée de sorte qu'au moins une partie du poussoir se fléchit d'autant plus qu'une pression du poussoir contre l'empilement augmente.

Ainsi, cette flexion permet de diminuer la pression de contact dans la zone de la surface de poussée qui n'est pas convenablement centrée par rapport à la surface de friction. Cette partie du poussoir peut être la plus proche de l'empilement ou celle qui en est la plus éloignée.

Dans un mode de réalisation, une partie du poussoir présente une dimension axiale qui décroit en direction d'une extrémité libre de cette partie.

Cette configuration permet de contrôler la déformation de cette partie déformable du poussoir et donc de contrôler la répartition de la pression de contact. Cette partie du poussoir peut être la plus proche de l'empilement ou celle qui en est la plus éloignée.

On peut prévoir que, l'encoche présentant deux faces principales en regard l'une de l'autre, l'une de ces faces est inclinée en étant orientée en direction de l'extérieur du poussoir.

Cette face inclinée favorise la flexion du poussoir. De plus, en simplifiant l'accès au fond de l'encoche, elle facilite son usinage le cas échéant.

Avantageusement, la face inclinée s'étend d'un côté de l'encoche le plus proche de l'empilement.

Cet agencement constitue une façon de réaliser la partie déformable du poussoir tout en contrôlant la déformation et l'évolution de la pression de contact.

On peut prévoir que le poussoir présente une face de guidage du poussoir suivant la direction axiale par rapport à un support.

De préférence, la face de guidage s'étend tout entière d'un côté de l'encoche le plus éloigné de l'empilement.

Ainsi il n'y a pas d'interférence au sein du poussoir entre la zone dévolue à la déformation lors de la poussée et celle servant au guidage.

On peut prévoir que la machine comprend un ressort calibré apte à pousser le poussoir contre l'empilement.

On entend par là que le ressort fournit une sollicitation de freinage d'intensité constante en l'absence d'autre sollicitation. On peut alors dimensionner l'encoche en fonction de cette intensité pour obtenir la répartition de contraintes souhaitée. Ainsi, si on le désire, on peut dimensionner la flexion de la pièce.

La machine pourra présenter en outre au moins l'une quelconque des caractéristiques suivantes :
- elle comprend un ressort apte à pousser le poussoir contre l'empilement et une chambre de défreinage agencée de sorte qu'une pression hydraulique dans la chambre applique sur le ressort un effort antagoniste au freinage ;
- l'empilement baigne dans de l'huile ;
- les disques sont en acier nitruré ;
- les disques comprennent une garniture d'un matériau de friction ;
- la garniture présente des rainures ; et
- l'empilement forme un frein ou un embrayage.

Les rainures peuvent ainsi servir à faire passer l'huile, le cas échéant.

On peut prévoir que le frein, le cas échéant, assure au moins l'une des fonctions de frein de moteur, de frein de secours, de frein d'urgence (de sorte que, en cas de panne de la machine, le frein l'immobilise) et de frein de parking.

### DESCRIPTION DES FIGURES

Nous allons maintenant présenter un mode de réalisation de l'invention à titre d'exemple non-limitatif à l'appui des dessins sur lesquels :
- la figure 1 est une vue en coupe axiale d'une machine selon l'art antérieur ;
- la figure 2 est une vue en coupe transversale de la machine suivant le plan II-II de la figure 1 ;
- la figure 3 est une vue d'une machine selon un mode de réalisation de l'invention;
- les figures 4 et 5 sont différents schémas en vue axiale montrant principalement le poussoir de la machine de la figure 3 et illustrant des caractéristiques de ce dernier ; et
- les figures 6 et 7 illustrent une installation de simulation numérique des efforts dans le poussoir et la pile de disques de la machine de la figure 3 et les valeurs de pression observées.

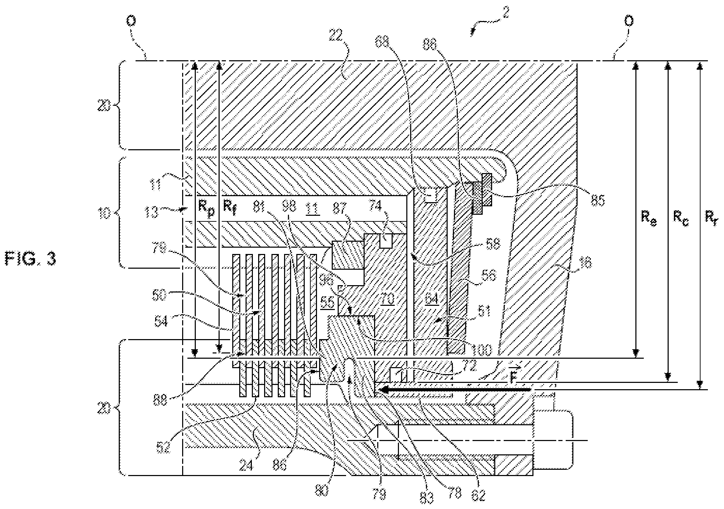

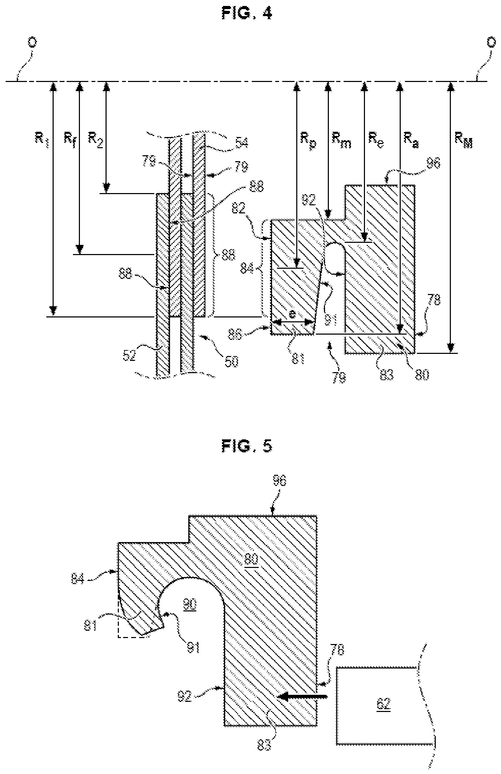

Tout comme la machine des figures 1 et 2, la machine hydraulique 2 selon le présent mode de réalisation de l'invention, illustrée sur les figures 3 et 4, est centrée sur un axe O-O, et comprend essentiellement cinq ensembles complémentaires : un boîtier 10, un arbre 20, un ensemble formant moteur ou pompe, non-illustré et disposé entre le boîtier 10 et l'arbre 20, des moyens non-illustrés formant paliers de guidage à rotation relative de l'arbre 20 par rapport au boîtier 10, et un frein 49.

Le boîtier 10 est destiné à être fixé au châssis d'une machine ou d'un véhicule. Il comprend une came à lobes multiples non-illustrée et prise en sandwich entre deux éléments latéraux du boîtier.

L'arbre 20 supporte une prise de force adaptée pour porter un accessoire qui doit être entraîné à rotation, par exemple la jante d'une roue ou tout autre équipement, dans le cas où la machine constitue un moteur. Dans le cas où elle constitue une pompe, la prise de force reçoit un couple mécanique moteur appliqué sur l'entrée de la machine.

L'ensemble formant moteur ou pompe est à pistons radiaux. Il comprend pour l'essentiel un distributeur et un bloc cylindres qui comporte des cylindres radiaux logeant les pistons respectifs et portant chacun un galet en appui contre la came solidaire du boîtier. Le nombre de cylindres et donc de pistons du bloc cylindres diffère du nombre de lobes de la came. Comme dans la machine des figures 1 et 2, la came est radialement externe et le bloc cylindres, situé radialement à l'intérieur de la came, a ses cylindres qui débouchent radialement vers l'extérieur, en regard de la came. Le distributeur est alimenté via un élément qui forme couvercle et raccord pour l'alimentation du distributeur.

De façon connue en soi, lorsque le distributeur applique cycliquement un fluide sous pression à l'intérieur des cylindres, la sollicitation des pistons et des galets associés sur la came entraîne le bloc cylindres à rotation par rapport à la came et par conséquent par rapport au boîtier. Le bloc cylindres étant lié à rotation avec l'élément central de l'arbre 20 par un système de cannelures longitudinales, l'arbre est entraîné à rotation par la pression du fluide. La machine constitue dans ce cas un moteur. Lorsque, au contraire, un effort mécanique est appliqué par la prise de force sur l'arbre 20 dans le sens d'un entraînement à rotation par rapport au boîtier 10, le déplacement des galets et des pistons par rapport aux lobes de la came induit une variation de volume des cylindres et par conséquent applique une pression de fluide sur le distributeur. La machine fonctionne alors en pompe. Cette machine est ainsi réversible, et donc fonctionne indifféremment en tant que pompe ou moteur, et peut également tourner dans deux sens de rotation.

Pour limiter l'encombrement axial de la machine, la prise de force peut être prévue radialement sur l'extérieur d'un élément radialement externe comme dans le cas de la figure 3. Selon une variante de réalisation, la prise de force est placée axialement sur un disque transversal à l'axe O-O, comme c'était le cas sur la figure 1.

Sur la figure 3, on a indiqué la partie fixe associée au boitier 10 et la partie tournante comprenant l'arbre 20. Les moyens formant paliers, non-illustrés, comprennent deux roulements à rouleaux intercalés entre l'arbre 20 et le boîtier 10.

L'arbre 20 présente une zone centrale ou moyeu 22 interceptée par l'axe O-O et une extension cylindrique 24 éloignée de l'axe, formant une couronne et reliée à la zone centrale par un disque de liaison 16.

Le boîtier 10 présente une extension axiale cylindrique 11.

Le frein 49 est du type frein à disques. Il est formé d'un empilement de disques 52, 54 reliés alternativement à rotation les uns à l'arbre 20 et les autres au boîtier 10. Les disques sont donc reliés à la partie fixe 10 et à la partie tournante 20 suivant une alternance spatiale le long de l'axe longitudinal O-O.

Chacun des disques 52, 54 est formé d'une rondelle. Leur liaison à rotation au boîtier et à l'arbre respectivement peut être formée par exemple par l'engagement de nervures prévues sur la périphérie radialement externe ou alternativement radialement interne des disques 52, 54 dans des cannelures ou rainures complémentaires formées en regard sur la couronne 24 de l'arbre et l'extension 11 de boîtier respectivement associés. En variante, on peut prévoir une pièce intermédiaire de liaison à rotation intercalée entre les disques 52 ou 54 et l'un du boîtier 10 ou de l'arbre 20.

La machine présente une chambre de frein 55 placée à l'opposé du bloc cylindres en direction axiale par rapport à l'empilement de disques. Elle se situe ainsi sur la figure 3 à droite de cet empilement. Le frein 49 est disposé en l'espèce à l'extrémité axiale de la machine adjacente à la prise de force, c'est-à-dire proche de la prise de force, à l'opposé du distributeur par rapport au bloc cylindres.

On qualifie ici de « proximale » la partie d'une pièce du frein 49 orientée vers l'ensemble formant moteur ou pompe, donc vers la gauche sur la figure 3, et de « distale », sa partie orientée à l'opposé, soit en éloignement de cet ensemble, vers l'extérieur de la machine, vers la droite sur la figure.

De plus, la chambre de frein 55 tout comme l'extension axiale 11 du boîtier 10 sont en l'espèce interposés en direction radiale entre la zone centrale 22 et la couronne 24 de l'arbre 20.

L'empilement 50 de disques est placé ici encore entre deux butées axiales. L'un est semblable à la butée 17 de la figure 1 et n'est pas illustrée à la figure 3. L'autre est le poussoir 80 que l'on décrira plus loin. Les disques alternés sont sollicités en appui mutuel, donc en position de freinage, par un élément élastique 56, par exemple du type rondelle Belleville. La rondelle Belleville a sa concavité dirigée vers l'empilement 50 en l'espèce. Elle s'appuie sur un piston longitudinal annulaire 51 sollicitant l'empilement 50 au freinage, de préférence par sa périphérie radialement externe selon le mode de réalisation illustré.

Au ressort 56 sont associés, du côté du ressort opposé au piston en direction axiale, un anneau d'arrêt 85 logé dans une gorge annulaire de l'extension 11 et une cale 89 interposée entre eux en direction axiale. L'anneau et la cale assurent le blocage axial du bord du ressort le plus proche de l'axe O-O.

Un effort antagoniste à l'organe élastique 56 peut être appliqué dans une chambre de commande ou de défreinage 58, située entre l'empilement de disques 50 et le piston longitudinal 51, afin de placer le frein 49 en position de défreinage. Le piston 51 qui définit la chambre de défreinage 58 est mobile à coulissement selon l'axe O-O par rapport au boîtier 10.

Il comprend une partie formant un fourreau cylindrique 62 intercalé suivant la direction axiale entre l'empilement de disques 50 et le ressort 56. Le fourreau 62 est prolongé par une partie en forme de rondelle 64 transversale à l'axe O-O, associée à un joint d'étanchéité 68 par rapport à l'extension 11 pour constituer une paroi de la chambre de défreinage 58. Le fourreau 62 sert, au niveau de son extrémité proximale, d'élément de sollicitation en appui sur l'empilement des disques 52, 54. Les pièces 62 et 64 sont assemblées l'une sur l'autre de manière rigide et étanche, par exemple par vissage et en incorporant un moyen d'étanchéité statique tel qu'un joint, ou encore sont d'un seul bloc comme illustré. Le piston 51 présente ainsi une demie section en « L », possédant une branche 64 transversale à l'axe et une branche longitudinale parallèle à cet axe, qui correspond au fourreau 62. Le piston 51 est ainsi apte à appliquer sur le ressort 56 un effort antagoniste au freinage, lorsqu'une pression est appliquée dans la chambre de défreinage 58 pour expanser celle-ci. D'autres modalités de positionnement et de coopération entre le piston 51 et le ressort 56 sont possibles.

La machine comprend un anneau 70, transversal à l'axe O-O, placé entre l'empilement de disques 50 et la rondelle 64 du piston. L'anneau 70 forme l'une des parois transversales de la chambre de défreinage 58. Il est logé en direction radiale entre le fourreau 62 et l'extension 11 en regard et possède un jeu pour coulissement par rapport au piston 51, c'est-à-dire une dimension radiale inférieure à l'écart radial existant entre ces pièces, pour permettre au moins un léger déplacement axial relatif entre l'anneau 70 et le piston 51. L'anneau 70 est associé à deux joints 72, 74 qui coopèrent respectivement avec le piston 51 et l'élément 11 de boîtier. La partie de fourreau 62 est à glissement relatif par rapport à l'anneau 70.

La chambre de défreinage 58 a ainsi une forme annulaire et est délimitée en direction axiale par la rondelle de piston 64 et l'anneau 70 et radialement par le fourreau 62 et l'extension 11.

La chambre de défreinage 58 est fermée par les trois joints 68, 72 et 74.

Le joint 68 associé au piston 51 est du type dit « joint D ring » conforme à la norme DIN 11850 comprenant une face hémicirculaire et une face plane. Il est logé dans une rainure de largeur complémentaire, formée de préférence dans la rondelle 64, ou en variante dans l'élément 11 du boîtier placé en regard de cette dernière. La face plane du joint 68 est placée dans le fond de la rainure. Sa face hémicirculaire repose contre l'élément en regard susceptible de translation relative selon l'axe O-O.

Le joint 72 assurant l'étanchéité entre l'anneau 70 et le piston 51 est du même type en l'espèce.

Le joint 74 assurant l'étanchéité entre l'anneau 70 et l'élément 11 de boîtier 10 placé en regard est de préférence un joint torique, ou un joint en forme de D « Dring ». Quand il est placé sur la rondelle 70 comme illustré, l'emploi d'un Dring permet une bonne tenue du joint au montage.

La chambre de défreinage 58 est alimentée par l'intermédiaire d'au moins un canal 13, au moins en partie longitudinal, formé dans l'extension 11 du boîtier pour déboucher dans la chambre 58. Sans que cela soit limitatif, le canal 13 peut par exemple déboucher au niveau d'un décrochement formé sur la périphérie de l'extension longitudinale 11 comme illustré sur la figure 3. Le canal 13 est relié à une conduite de commande de défreinage de la machine hydraulique.

Le poussoir 80 est intercalé en direction axiale entre l'empilement de disques 50 et l'anneau 70.

La machine comprend donc ici, en direction axiale longitudinale, du proximal vers le distal, notamment :
- l'empilement de disques 50,
- le poussoir 80 en appui axial direct sur le premier disque de l'empilement,
- l'anneau 70 en appui axial direct sur le poussoir 80,
- le fourreau 62 lui aussi en appui axial direct sur le poussoir 80, autour de l'anneau 70,
- la chambre de défreinage 58,
- la rondelle 64 du piston 51,
- le ressort 56,
- la cale 89, et
- l'anneau d'arrêt 85.

Une cale 87 est interposée en direction axiale entre un épaulement de l'extension 11 du boîtier et la portion de l'anneau 70 la plus proche de l'axe.

Au repos, le ressort 56 sollicite le fourreau 62 et le poussoir 80 en appui axial sur l'empilement de disques 52, 54 et ainsi sollicite les disques en appui mutuel les uns contre les autres. Le frein 49 est alors en position de freinage. L'arbre 20 est immobilisé rigidement par rapport au boîtier 10.

En revanche, on suppose qu'une pression de fluide est appliquée dans la chambre de défreinage 58 et génère un effort axial antagoniste au ressort 56 et supérieur à l'effort de freinage généré par ce dernier. Puisque la butée axiale 87 limite les déplacements de l'anneau 70, l'augmentation du volume de la chambre de défreinage 58 conduit à un déplacement du piston 51 en direction du ressort 56 et donc à une réduction de l'espace libre pour ce dernier, entre le piston 51 et la cale 89, et donc annule l'effort exercé en position de freinage par le ressort 56 sur l'empilement de disques 52, 54. Ces derniers n'étant plus sollicités en appui mutuel, le frein 49 est placé en position de défreinage. L'arbre peut tourner par rapport au boîtier.

Avant de décrire le détail du poussoir 80, il importe de souligner que l'organisation générale de la machine qui a été présentée est donnée à titre d'exemple et que de très nombreuses autres configurations sont possibles. Cette configuration de la machine et ses différentes caractéristiques ne sont donc pas liées à l'invention. Elles sont seulement propres au présent mode de réalisation. L'invention est compatible par exemple avec la configuration générale de la machine de l'art antérieur des figures 1 et 2.

En référence notamment aux figures 3 et 4, la cale 80 a une forme générale annulaire. Elle présente une face plane avant annulaire proximale 82 perpendiculaire à l'axe O-O et apte à venir en contact axial avec le premier disque 54 de l'empilement. On distingue sur cette face d'une part une zone de poussée annulaire 84 apte à venir effectivement en contact avec ce disque et une zone inerte ou inactive 86 qui n'est pas en contact avec ce disque lorsque la zone de poussée l'est. La zone de poussée 84 se trouve en regard du disque, au contraire de la zone inerte 86.

La zone de poussée 84 présente un rayon moyen Rₚ mesuré par rapport à l'axe. Cette moyenne est calculée par exemple comme la moyenne arithmétique des rayons extrêmes de la zone de poussée, à savoir le plus petit Rₘ et le plus grand R₁. D'autres modes de calcul sont possibles, par exemple en prenant en compte l'intégrale des rayons de la zone de poussée.

Les disques 52, 54 sont aptes à être en appui les uns contre les autres par des surfaces de friction. Ainsi, de la même façon, sur chaque disque, on peut distinguer une zone de friction annulaire 88 apte à venir effectivement en contact avec le disque contigu en position de freinage et une zone inerte ou inactive 79 qui n'est pas en contact avec ce disque en position de freinage. La zone de friction 88 se trouve en regard du disque contigu au contraire de la zone inerte 79.

La zone de friction 88 présente un rayon moyen R_{f} par référence à l'axe. Ici encore, la moyenne est calculée par exemple comme la moyenne arithmétique des rayons extrêmes de la zone de friction, à savoir le plus petit R₂ et le plus grand R₁. D'autres modes de calcul sont possibles, par exemple en prenant en compte l'intégrale des rayons de la zone.

Les disques 52 en prise directe avec la couronne 24 sont identiques entre eux. De même, les disques 54 en prise directe avec le boîtier 10 sont identiques entre eux. Puisque les zones de friction 88 de tous les disques sont en coïncidence suivant la direction axiale, le rayon moyen R_{f} est le même dans tout l'empilement.

Dans la configuration illustrée à la figure 3, le rayon moyen de poussée Rₚ s'étend au-delà du rayon moyen de friction R_{f}. En d'autres termes, le rayon moyen de poussée est supérieur au rayon moyen de friction. Cela signifie que la zone de poussée 84 du poussoir 80 est décalée par rapport aux zones de friction 88 en direction radiale opposée à l'axe O-O.

On peut aussi observer ici que le poussoir 80 présente un plus grand rayon R_{M}, mesuré au niveau de sa face arrière en contact avec le fourreau et de sa face cylindrique externe, supérieur au plus grand rayon R₁ des surfaces de friction 88. Mais même la face avant 82 du poussoir a ici un plus grand rayon Rₐ supérieur au plus grand rayon R₁ des surfaces de friction 88. Elle présente en outre un plus petit rayon Rₘ supérieur au plus petit rayon R₂ des surfaces de friction 88.

Le poussoir 80 présente une encoche annulaire radiale 90 entamant le poussoir à partir d'un côté circonférentiel du poussoir opposé à l'axe O-O sachant que le rayon moyen de poussée Rₚ s'étend ici au-delà du rayon moyen de friction R_{f}. Cette encoche a une forme générale annulaire et s'étend généralement suivant un plan perpendiculaire à l'axe. L'encoche 90 s'étend dans une partie du poussoir qui transmet une poussée sur les disques.

L'encoche a ici un profil en « U » en direction circonférentielle et présente deux faces principales 91, 92 en regard l'une de l'autre. La face arrière 92 est plane et perpendiculaire à l'axe.

L'encoche s'étend par exemple sur plus de la moitié de l'épaisseur totale du poussoir mesurée suivant la direction radiale. Mais elle peut aussi s'étendre sur les deux tiers, voire les trois quarts de cette dimension et prendre toute valeur comprise entre ces bornes, bornes incluses.

L'encoche 90 est dimensionnée en l'espèce de sorte que le rayon moyen de friction R_{f} est compris entre un plus grand rayon Rₐ de l'encoche et un plus petit rayon Rₑ de l'encoche. Le fond de l'encoche s'étend donc ici jusqu'à l'extrémité du rayon moyen de friction R_{f}, et un peu au-delà suivant la direction radiale en allant vers l'axe.

L'encoche 90 délimite ainsi une portion avant 81 du poussoir 80 qui peut venir en contact avec l'empilement 50 et une portion arrière 83 qui ne peut pas venir en contact avec l'empilement et peut venir en contact avec l'anneau 70 dans la présente configuration.

Le fond de l'encoche 90 s'étend au droit de la zone de poussée 84 par référence à l'axe. En d'autres termes, le rayon Rₑ de l'encoche au fond de l'encoche est compris entre le plus petit rayon Rₘ de la zone de poussée 84 et le plus grand rayon R₁ de la zone de poussée.

Le fond de l'encoche s'étend au droit des surfaces de friction 88. En d'autres termes, le rayon Rₑ de l'encoche au fond de l'encoche est compris entre le plus petit rayon R₂ des surfaces de friction 88 et le plus grand rayon R₁ des surfaces de friction. En particulier, le plus grand rayon R₁ des surfaces de friction 88 est supérieur au plus petit rayon de l'encoche.

Le rayon R_{M} de la partie arrière 83 est en l'espèce plus grand que celui Rₐ de sa partie avant 81. En particulier ici, le fourreau 62 exerce une pression axiale sur la portion de la partie arrière 83 qui présente le plus grand rayon et qui n'a pas de portion en regard dans le poussoir au niveau de la partie avant 81.

La machine est configurée pour que le fourreau 62 exerce sur le poussoir 80 un effort de freinage sur une zone de réception 78 du poussoir présentant un rayon moyen de réception Rᵣ, représenté à la figure 3 et mesuré à partir de l'axe. Ce rayon est supérieur au rayon moyen de poussée Rₚ lorsque ce dernier s'étend au-delà du rayon moyen de friction R_{f}, comme c'est le cas ici.

En l'espèce, la zone de réception 78 présente un plus petit rayon R_{c} qui est supérieur à un plus grand rayon R₁ de la surface de poussée ou de la surface de friction. Ce plus petit rayon R_{c} est aussi supérieur au plus petit rayon Rₑ de l'encoche mesuré au fond de cette dernière.

Comme la plupart des pièces, le poussoir 80 est réalisé en métal. L'encoche 90 lui confère la possibilité de se fléchir afin de rapprocher l'extrémité libre de la partie avant 81 en direction de la partie arrière 83 et/ou de rapprocher l'extrémité libre de la partie arrière en direction de la partie avant. Cette flexion se produit lorsque le poussoir est un appui contre l'empilement 50 en position de freinage. Cette flexion a été représentée de façon très exagérée sur la figure 5 en traits pleins en comparaison avec la configuration non fléchie illustrée en traits pointillés. Cette figure illustre à titre d'exemple le cas dans lequel c'est l'extrémité libre de la partie avant 81 qui se rapproche de la partie arrière 83, étant entendu que l'inverse est également possible, ainsi que la combinaison des deux mouvements.

Dans l'exemple de flexion illustré à la figure 5, lorsque la flexion se produit, c'est la portion de la partie avant 81 la plus proche de son extrémité libre qui se fléchit en premier et davantage que le reste de cette partie avant. Cette flexion permet de diminuer la pression de contact sur une partie de la surface de contact. Elle permet aussi de répartir la pression de contact d'une manière déterminée. La surface de poussée 84 contre l'empilement de disques 50 tend donc à se réduire pour se ramener à sa portion la plus proche de l'axe O-O. Et surtout la poussée exercée par le poussoir 80 sur l'empilement tend à se concentrer sur la partie de la surface de poussée 84 la plus proche de l'axe afin d'être davantage en coïncidence avec les surfaces de friction 88. Cette répartition des sollicitations vient donc compenser la différence entre les rayons moyens de poussée Rₚ et de friction R_{f}.

Cette flexion illustre l'influence de l'encoche 90, qui, produisant un affaiblissement du poussoir 80, tend à ramener l'effort excentré sur RM autour du rayon Rₑ. Il se produit ensuite en diffusion de l'effort, concentré en Rₑ, vers la surface 84. Cette diffusion est fonction de l'épaisseur de la parte avant 81, notée e. Cette épaisseur, correctement déterminée, assure une diffusion de l'effort presseur F, d'une manière la plus homogène possible.

Dans l'idéal, les surfaces de contact 82 et 88 sont confondues. Autrement dit, Rₘ = R₂ ; Rₐ = R₁ et donc R_{f} = Rₚ.

Le poussoir 80 présente une face de guidage 96 d'un coulissement du poussoir suivant la direction axiale par rapport à un support formé ici par un épaulement 98 de l'anneau 70. A cette fin ce dernier présente une face cylindrique 100 réalisant un contact surfacique avec la face 96. La face de guidage 96 assure un centrage du poussoir dans la machine.

Comme illustré sur la figure 4, la face de guidage 96 s'étend tout entière d'un côté de l'encoche 90 le plus éloigné de l'empilement, à savoir sur la partie arrière distale 83. On évite ainsi tout risque d'interférence avec la fonction de guidage lors de la poussée et de la flexion en situation de freinage. Sur les figures 3 et 5, le poussoir est illustré sans présenter cette caractéristique.

On observera que la pression de contact est transmise du piston 51 à l'empilement par le seul intermédiaire du poussoir 80, ce dernier constituant un ensemble rigide qui peut être formé d'un seul tenant.

À titre de variante, dans la situation inverse, la surface de poussée 84 présente un rayon moyen de poussée Rₚ par rapport à l'axe qui s'étend en-deçà du rayon moyen de friction R_{f}. En d'autres termes, le rayon moyen de poussée est inférieur au rayon moyen de friction. Cela signifie que la zone de poussée du poussoir 80 est décalée par rapport aux zones de friction 88 en direction de l'axe.

Par ailleurs, et indépendamment de cet aspect, on voit sur la figure 4 que l'une 91 des faces principales de l'encoche 90 est inclinée pour être orientée en direction de l'extérieur du poussoir. Il s'agit ici de la face avant proximale, située donc du côté de l'empilement 50, sur la partie 81. Cette inclinaison facilite l'accès au fond de l'encoche lors de la réalisation de cette dernière, notamment par usinage.

S'agissant de la face qui s'étend du côté de l'encoche le plus proche de l'empilement et puisque la face de poussée 84 est plane, il s'ensuit que la partie proximale 81 du poussoir, la plus proche de l'empilement, présente une dimension axiale e qui décroît en direction d'une extrémité libre de cette portion. Cette dimension a été illustrée en particulier à la figure 4, de façon exagérée. Grâce à cet agencement, dans cet exemple, la partie 81 se fléchit d'autant plus qu'une pression du poussoir contre l'empilement augmente. Cet agencement permet donc de bien contrôler l'amplitude de la flexion en fonction de l'effort de poussée.

Mais on pourrait donner une forme similaire à l'autre partie 83 du poussoir pour obtenir la même propriété sur cette autre partie, en combinaison avec cette configuration de la partie proximale 81 ou pas.

Le poussoir 80 qui forme une cale a donc une forme optimisée pour la diffusion et la répartition de la pression de contact dans la pile de disques.

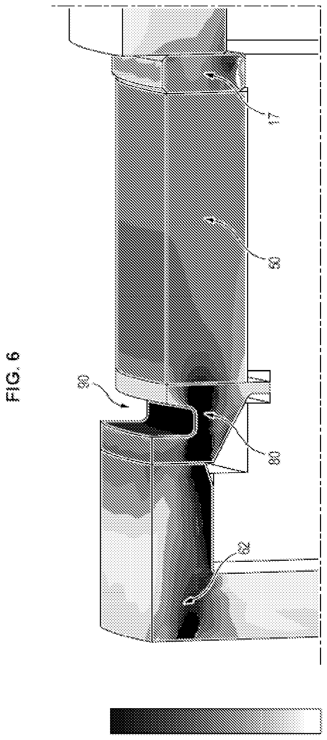

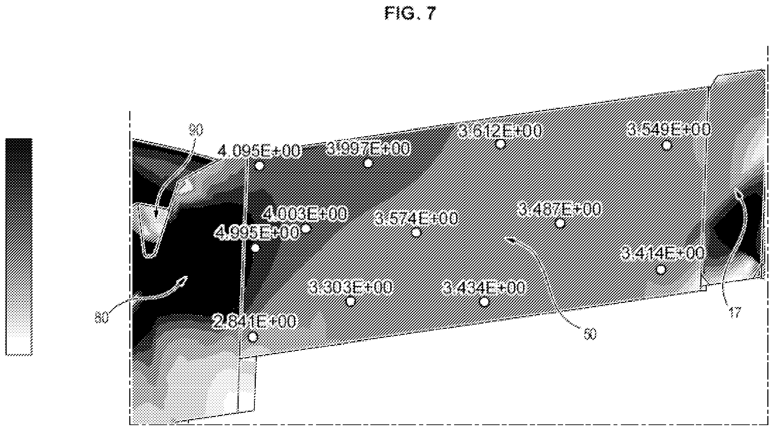

Cela ressort des figures 6 et 7 qui montrent une simulation numérique de la répartition des efforts dans la machine. Dans cette simulation, seuls ont été pris en compte de façon simplifiée le fourreau 62, le poussoir 80, l'empilement 50 qui est ici figuré d'un seul bloc et la cale 17 située de l'autre côté de l'empilement. Le poussoir 80 a ici la même configuration générale que celle de la figure 3, l'encoche 90 entamant le poussoir depuis son côté le plus éloigné de l'axe.

Les deux figures illustrent la répartition des efforts dans la pile de disques. On voit que cette répartition est bonne. En effet, la pression générée à l'interface de contact entre le fourreau 62 et le poussoir 80 avoisine les 6 MPa. C'est la même valeur de pression qu'on retrouve dans toute la portion médiane du poussoir 80, notamment au fond de l'encoche 90 et jusqu'à l'interface de contact avec l'empilement 50. En revanche, à l'intérieur de l'empilement, la pression locale diminue très rapidement à mesure qu'on s'éloigne du poussoir, pour prendre des valeurs comprises entre 3 et 4 MPa, voire encore moins. Dans cet exemple, la pression générée du côté du fourreau diminue donc de 2 MPa une fois transmise dans l'empilement. De plus, la pression moyenne mesurée à l'intérieur de l'empilement reste relativement constante. On réalise donc un bon compromis entre la répartition des pressions de contact dans la pile de disques d'une part et la résistance mécanique et les contraintes d'usinage du poussoir d'autre part.

L'empilement de disques 50 baigne dans de l'huile de lubrification et de refroidissement. Les disques sont réalisés par exemple en acier nitruré. Ils peuvent être équipés d'une garniture d'un matériau de friction, la garniture étant par exemple rainurée pour permettre le passage de l'huile entre les disques. Les disques peuvent aussi comporter des perçages ou des rainures traversantes pour les mêmes raisons.

Bien entendu, on pourra rapporter à l'invention de nombreuses modifications sans sortir du cadre de celle-ci.

Par exemple, l'empilement de disques pourra servir d'embrayage dans la machine tournante.

Le guidage du poussoir 80 peut avoir lieu au moyen d'une face du poussoir orientée en direction opposée à l'axe.

## Revendications

1. Machine hydraulique (2) comprenant :
- une partie fixe (10),
- une partie montée tournante (20) autour d'un axe (O-O) par rapport à la partie fixe,
- un empilement (50) de disques (53, 54) formant frein ou embrayage, les disques étant aptes à être en appui les uns contre les autres par des surfaces de friction (88) présentant un rayon moyen de friction (R_{f}) mesuré à partir de l'axe ; et
- un poussoir (80) apte à pousser les disques en appui les uns contre les autres, dans une direction parallèle à l'axe, suivant une surface de poussée (84) ,
le poussoir (80) présentant une encoche annulaire radiale (90),
**caractérisée en ce que** la surface de poussée présente un rayon moyen de poussée (Rₚ) mesuré à partir de l'axe et qui s'étend en deçà ou au-delà du rayon moyen de friction (R_{f}),
l'encoche entamant le poussoir à partir d'un côté du poussoir opposé à l'axe (O-O) lorsque le rayon moyen de poussée (Rₚ) s'étend au-delà du rayon moyen de friction (R_{f}), et à partir d'un côté du poussoir le plus proche de l'axe dans le cas contraire,
l'encoche (90) étant dimensionnée de sorte que le rayon moyen de friction (R_{f}) est compris entre un plus grand rayon (Rₐ) de l'encoche et un plus petit rayon (Rₑ) de l'encoche.

2. Machine selon la revendication précédente dans laquelle le poussoir (80) présente un rayon (Rₐ, R_{M}) supérieur à un plus grand rayon (R₁) des surfaces de friction.

3. Machine selon au moins l'une quelconque des revendications précédentes, agencée de sorte qu'au moins une partie (81, 83) du poussoir (80) se fléchit d'autant plus qu'une pression du poussoir contre l'empilement augmente.

4. Machine selon au moins l'une quelconque des revendications précédentes dans laquelle au moins une partie (81) du poussoir (80) présente une dimension axiale (e) qui décroît en direction d'une extrémité libre de cette partie.

5. Machine selon au moins l'une quelconque des revendications précédentes dans laquelle, l'encoche (90) présentant deux faces principales (91, 92) en regard l'une de l'autre, l'une (91) de ces faces est inclinée en étant orientée en direction de l'extérieur du poussoir.

6. Machine selon la revendication précédente dans laquelle la face inclinée (91) s'étend d'un côté de l'encoche (90) le plus proche de l'empilement (50).

7. Machine selon au moins l'une quelconque des revendications précédentes dans laquelle le poussoir (80) présente une face (96) de guidage du poussoir suivant la direction axiale par rapport à un support (70).

8. Machine selon la revendication précédente dans laquelle la face de guidage (96) s'étend tout entière d'un côté de l'encoche (90) le plus éloigné de l'empilement (50).

9. Machine selon au moins l'une quelconque des revendications précédentes qui comprend :
- un ressort (56) apte à pousser le poussoir (80) contre l'empilement, et
- une chambre de défreinage (58) agencée de sorte qu'une pression hydraulique dans la chambre applique sur le ressort un effort antagoniste au freinage.

10. Machine selon au moins l'une quelconque des revendications précédentes dans laquelle l'empilement (50) baigne dans de l'huile.

11. Machine selon au moins l'une quelconque des revendications précédentes dans laquelle les disques (52, 54) sont en acier nitruré.

12. Machine selon au moins l'une quelconque des revendications précédentes dans laquelle les disques (52, 54) comprennent une garniture d'un matériau de friction,

13. Machine selon la revendication précédente dans laquelle la garniture présente des rainures.

14. Machine selon au moins l'une quelconque des revendications précédentes dans laquelle l'empilement (50) forme un frein.

## Patentansprüche

1. Hydraulische Maschine (2), umfassend:
- einen festen Teil (10),
- einen um eine Achse (O-O) in Bezug auf den festen Teil drehend angebrachten Teil (20),
- einen Stapel (50) von Scheiben (53, 54), die eine Bremse oder Kupplung bilden, wobei die Scheiben geeignet sind, mittels Reibungsflächen (88) mit einem mittleren Reibungsradius (R_{f}), gemessen von der Achse, aneinander anzuliegen; und
- einen Schieber (80), der geeignet ist, die Scheiben in einer zur Achse parallelen Richtung entlang einer Schiebefläche (84) aneinander in Anlage zu schieben,
wobei der Schieber (80) eine radiale ringförmige Nut (90) aufweist,
**dadurch gekennzeichnet, dass** die Schiebefläche einen mittleren Schieberadius (Rₚ) aufweist, der von der Achse aus gemessen wird und sich diesseits oder jenseits des mittleren Reibungsradius (R_{f}) erstreckt,
wobei die Nut den Schieber (80) von einer Seite des Schiebers gegenüber der Achse (O-O) angreift, wenn sich der mittlere Schieberadius (Rₚ) jenseits des mittleren Reibungsradius (R_{f}) erstreckt, und im gegenteiligen Fall von einer Seite des Schiebers, die der Achse am nächsten liegt,
wobei die Nut (90) derart dimensioniert ist, dass der mittlere Reibungsradius (R_{f}) zwischen einem größten Radius (Rₐ) der Nut und einem kleinsten Radius (Rₑ) der Nut liegt.

2. Maschine nach vorhergehendem Anspruch, wobei der Schieber (80) einen Radius (Rₐ, R_{M}) aufweist, der größer ist als ein größter Radius (R₁) der Reibungsflächen.

3. Maschine nach mindestens einem der vorhergehenden Ansprüche, die so eingerichtet ist, dass sich mindestens ein Teil (81, 83) des Schiebers (80) umso mehr verbiegt, je mehr ein Druck des Schiebers gegen den Stapel zunimmt.

4. Maschine nach mindestens einem der vorhergehenden Ansprüche, wobei der mindestens eine Teil (81) des Schiebers (80) eine axiale Abmessung (e) aufweist, die in Richtung eines freien Endes dieses Teils abnimmt.

5. Maschine nach mindestens einem der vorhergehenden Ansprüche, wobei, da die Nut (90) zwei einander zugewandte Hauptflächen (91, 92) aufweist, die eine (91) dieser Flächen geneigt ist, indem sie nach außerhalb des Schiebers ausgerichtet ist.

6. Maschine nach vorhergehendem Anspruch, wobei sich die schräge Fläche (91) auf einer Seite der Nut (90) erstreckt, die dem Stapel (50) am nächsten liegt.

7. Maschine nach mindestens einem der vorhergehenden Ansprüche, wobei der Schieber (80) eine Fläche (96) zur Führung des Schiebers entlang der axialen Richtung in Bezug auf einen Träger (70) aufweist.

8. Maschine nach vorhergehendem Anspruch, wobei sich die Führungsfläche (96) ganz von einer Seite der Nut (90) erstreckt, die am weitesten von dem Stapel (50) entfernt ist.

9. Maschine nach mindestens einem der vorhergehenden Ansprüche, die umfasst:
- eine Feder (56), die geeignet ist, den Schieber (80) gegen den Stapel zu drücken, und
- eine Bremsenlösekammer (58), die derart eingerichtet ist, dass ein hydraulischer Druck in der Kammer eine der Bremsung entgegenwirkende Kraft auf die Feder ausübt.

10. Maschine nach mindestens einem der vorhergehenden Ansprüche, wobei der Stapel (50) in Öl badet.

11. Maschine nach mindestens einem der vorhergehenden Ansprüche, wobei die Scheiben (52, 54) aus nitriertem Stahl bestehen.

12. Maschine nach mindestens einem der vorhergehenden Ansprüche, wobei die Scheiben (52, 54) einen Belag aus einem Reibmaterial umfassen.

13. Maschine nach vorhergehendem Anspruch, wobei der Belag Rillen aufweist.

14. Maschine nach mindestens einem der vorhergehenden Ansprüche, wobei der Stapel (50) eine Bremse bildet.

## Claims

1. A hydraulic machine (2) comprising:
- a fixed part (10),
- a part rotatably mounted (20) about an axis (O-O) with respect to the fixed part,
- a stack (50) of disks (53, 54) forming a brake or clutch, the disks being able to be in abutment against one another by way of friction surfaces (88) having a mean friction radius (R_{f}) measured from the axis; and
- a push rod (80) able to push the disks into abutment against one another, in a direction parallel to the axis, over a thrust surface (84),
the push rod (80) having a radial annular notch (90),
**characterised in that** the thrust surface has a mean thrust radius (Rₚ) measured from the axis and which extends within or beyond the mean friction radius (R_{f}),
the notch indenting the push rod from a side of the push rod opposite to the axis (O-O) when the mean thrust radius (Rₚ) extends beyond the mean friction radius (R_{f}), and otherwise from a side of the push rod closest to the axis,
the notch (90) being dimensioned so that the mean friction radius (R_{f}) is comprised between a largest radius (Rₐ) of the notch and a smallest radius (Rₑ) of the notch.

2. The machine according to the preceding claim, wherein the push rod (80) has a radius (Rₐ, R_{M}) greater than a largest radius (R₁) of the friction surfaces.

3. The machine according to at least any one of the preceding claims, arranged so that at least one part (81, 83) of the push rod (80) bends increasingly as thrust of the push rod against the stack increases.

4. The machine according to at least any one of the preceding claims, wherein at least one part (81) of the push rod (80) has an axial dimension (e) which decreases in the direction of a free end of this part.

5. The machine according to at least any one of the preceding claims, wherein the notch (90) having two main faces (91, 92) facing one another, one (91) of these faces is inclined oriented in the direction of the exterior of the push rod.

6. The machine according to the preceding claim, wherein the inclined face (91) extends from one side of the notch (90) closest to the stack (50).

7. The machine according to at least any one of the preceding claims, wherein the push rod (80) has a push rod guide face (96) in the axial direction with respect to a support (70).

8. The machine according to the preceding claim, wherein the guide face (96) extends entirely from one side of the notch (90) farthest away from the stack (50).

9. The machine according to at least any one of the preceding claims, which comprises:
- a spring (56) able to push the push rod (80) against the stack, and
- a de-braking chamber (58) arranged so that hydraulic pressure in the chamber applies a force opposing braking to the spring.

10. The machine according to at least any one of the preceding claims, wherein the stack (50) is in an oil bath.

11. The machine according to at least any one of the preceding claims, wherein the disks (52, 54) are made of nitrided steel.

12. The machine according to at least any one of the preceding claims, wherein the disks (52, 54) comprise a lining of a friction material.

13. The machine according to the preceding claim, wherein the lining has grooves.

14. The machine according to at least any one of the preceding claims, wherein the stack (50) forms a brake.
